(19) Europäisches Patentamt
European Patent Office
Office européen des brevets

(11) **EP 4 421 453 B1**

(12) **EUROPÄISCHE PATENTSCHRIFT**

(45) Veröffentlichungstag und Bekanntmachung des Hinweises auf die Patenterteilung:
**09.04.2025 Patentblatt 2025/15**

(21) Anmeldenummer: **23158097.8**

(22) Anmeldetag: **23.02.2023**

(51) Internationale Patentklassifikation (IPC):
***G01D 5/20*** *(2006.01)*

(52) Gemeinsame Patentklassifikation (CPC):
**G01D 5/2053**

(54) **ABTASTELEMENT FÜR EINE INDUKTIVE WINKELMESSEINRICHRUNG**

SCANNING ELEMENT FOR AN INDUCTIVE ANGULAR MEASUREMENT DEVICE

ELÉMENT DE BALAYAGE POUR UN DISPOSITIF INDUCTIF DE MESURE D'ANGLE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**28.08.2024 Patentblatt 2024/35**

(73) Patentinhaber: **Dr. Johannes Heidenhain GmbH
83301 Traunreut (DE)**

(72) Erfinder:
• **HEINEMANN, Christoph
83236 Übersee (DE)**
• **HEUMANN, Martin
83278 Traunstein (DE)**

(56) Entgegenhaltungen:
EP-A1- 3 792 599      WO-A1-2018/002568
DE-A1- 102008 017 857    JP-A- 2006 322 927

**Beschreibung**

## GEBIET DER TECHNIK

Die Erfindung betrifft ein Abtastelement für eine induktive Winkelmesseinrichtung gemäß dem Anspruch 1 zur Positionsbestimmung eines Skalenelements relativ zu dem Abtastelement.

Induktive Positionsmesseinrichtungen werden beispielsweise als Winkelmessgeräte zur Bestimmung einer Winkelposition von relativ zueinander drehbaren Maschinenteilen verwendet. Bei induktiven Positionsmesseinrichtungen sind häufig Erregerspuren und Empfängerspuren etwa in Form von Leiterbahnen auf einer gemeinsamen meist mehrlagigen Leiterplatte aufgebracht, die beispielsweise mit einem Stator der Positionsmesseinrichtung fest verbunden ist. Dieser Leiterplatte gegenüber befindet sich ein Skalenelement, auf dem Teilungsstrukturen aufgebracht sind, und welches mit einem beweglichen Teil der Positionsmesseinrichtung fest verbunden ist. Wenn an den Erregerspuren ein zeitlich wechselnder elektrischer Erregerstrom angelegt wird, werden in den Empfängerspuren während der Relativbewegung zwischen dem Skalenelement und dem Abtastelement von der Position abhängige Signale erzeugt. Diese Signale werden dann in einer Auswerteelektronik weiterverarbeitet.

## STAND DER TECHNIK

Aus der WO 2018/002568 A1 ist gemäß der dortigen Figur 7 ein Abtastelement für eine induktive Winkelmesseinrichtung bekannt, welches mehrere Detektoreinheiten aufweist, die sich durch Lücken getrennt segmentartig entlang einer Kreislinie erstrecken.

## ZUSAMMENFASSUNG DER ERFINDUNG

Der Erfindung liegt die Aufgabe zugrunde ein vergleichsweise genau arbeitendes, kompaktes und kostengünstig herstellbares Abtastelement für eine induktive Winkelmesseinrichtung zu schaffen.

Diese Aufgabe wird erfindungsgemäß durch die Merkmale des Anspruches 1 gelöst.

Demnach weist das Abtastelement, welches für eine Verwendung in einer induktiven Winkelmesseinrichtung bestimmt und geeignet ist, eine erste, zweite, dritte und vierte Detektoreinheit auf. Die erste Detektoreinheit umfasst eine erste Empfängerleiterbahn, die sich über eine erste Bogenlänge erstreckt. Die zweite Detektoreinheit umfasst eine zweite Empfängerleiterbahn, wobei sich die zweite Empfängerleiterbahn über eine zweite Bogenlänge erstreckt. Die dritte Detektoreinheit umfasst eine dritte Empfängerleiterbahn, die sich über eine dritte Bogenlänge erstreckt. Die vierte Detektoreinheit umfasst eine vierte Empfängerleiterbahn, wobei sich die vierte Empfängerleiterbahn über eine vierte Bogenlänge erstreckt. Der Verlauf der ersten und der Verlauf der dritten Empfängerleiterbahn ist in Umfangsrichtung entlang einer ersten Kreislinie, die einen ersten Radius aufweist, periodisch ausgestaltet. Der Verlauf der zweiten und der Verlauf der vierten Empfängerleiterbahn ist in Umfangsrichtung entlang einer zweiten Kreislinie, die einen zweiten Radius aufweist, ebenfalls periodisch ausgestaltet. Die zweite und die vierte Empfängerleiterbahn sind so angeordnet, dass zwischen diesen in Umfangsrichtung eine erste Lücke mit einer ersten Lückenlänge und eine zweite Lücke einer zweiten Lückenlänge vorliegt. Der erste Radius und der zweite Radius sind unterschiedlich groß. Zudem sind entweder

    a) die erste Lückenlänge und die zweite Lückenlänge unterschiedlich groß, oder
    b) die zweite Bogenlänge und die vierte Bogenlänge unterschiedlich groß.

Das Abtastelement dient in einer Winkelmesseinrichtung dazu eine Winkelstellung relativ zu einem Skalenelement zu bestimmen, wobei das Skalenelement relativ zum Abtastelement um eine Achse drehbar angeordnet ist, so dass die Messrichtung die Umfangsrichtung bezogen auf die Achse darstellt. Die Bogenlängen und die Lückenlängen werden hier in Grad angegeben und beziehen sich auf einen jeweiligen Zentriwinkel um die Achse beziehungsweise um den gemeinsamen Mittelpunkt der konzentrisch angeordneten ersten und zweiten Kreislinien. Die Detektoreinheiten und insbesondere die Empfängerleiterbahnen verlaufen entlang der Umfangsrichtung.

Die zweiten und die vierten Empfängerleiterbahnen, insbesondere diejenigen, die gleichphasige Signale generieren, sind analog miteinander verschaltet zur Bildung von Summensignalen. Gleiches gilt für die Signale der ersten und der dritten Empfängerleiterbahnen.

Die zweite und die vierte Empfängerleiterbahn weisen jeweils einen periodischen Verlauf mit einer konstanten zweiten Periodenlänge $\lambda 2$ auf.

Die erste Lückenlänge $\beta 24$ beträgt ein Vielfaches m der zweiten Periodenlänge $\lambda 2$ und die zweite Lückenlänge $\gamma 24$ beträgt ein Vielfaches n der zweiten Periodenlänge $\lambda 2$ ($\beta 24 = m \cdot \lambda 2$ und $\gamma 24 = n \cdot \lambda 2$, mit m, n als Natürliche Zahlen größer Null).

In weiterer Ausgestaltung der Erfindung ist die zweite Periodenlänge $\lambda 2$ ein ganzzahliger zweiter Teiler von 360°, wobei vorteilhafterweise der zweite Teiler eine ungerade Zahl sein kann.

Mit Vorteil betragen die zweite Bogenlänge $\alpha2$ und die vierte Bogenlänge $\alpha4$ ein Vielfaches p, q der zweiten Periodenlänge $\lambda2$ ($\alpha2 = p\cdot\lambda2$ und $\alpha4 = q\cdot\lambda2$, mit p, q als Natürliche Zahlen größer Null).

Erfindungsgemäß sind die erste und die dritte Empfängerleiterbahn so angeordnet, dass zwischen diesen in Umfangsrichtung eine dritte Lücke mit einer dritten Lückenlänge und eine vierte Lücke mit der vierten Lückenlänge vorliegt. Insbesondere kann die dritte Lückenlänge gleich groß sein wie die vierte Lückenlänge.

In weiterer Ausgestaltung der Erfindung erstreckt sich die erste Empfängerleiterbahn über eine erste Bogenlänge und die dritte Empfängerleiterbahn über eine dritte Bogenlänge. Dabei ist die erste Bogenlänge gleich groß wie die dritte Bogenlänge.

Mit Vorteil weisen die erste Empfängerleiterbahn und die dritte Empfängerleiterbahn jeweils einen periodischen Verlauf mit einer konstanten ersten Periodenlänge $\lambda1$ auf, wobei die erste Periodenlänge $\lambda1$ ein ganzzahliger erster Teiler von 360° ist, insbesondere im Hinblick auf die erste Periodenlänge $\lambda1$ ist der erste Teiler vorteilhafterweise eine gerade Zahl. Demnach teilt die erste Periodenlänge $\lambda1$ den vollen Umfang von 360° in eine ganze Zahl. 360° ist also ein Vielfaches der ersten Periodenlänge $\lambda1$.

Vorteilhafterweise sind der erste Teiler und der zweite Teiler teilerfremd. Für die Funktion des Abtastelements ist es insbesondere wichtig, dass zumindest eine der Periodenlängen $\lambda1$, $\lambda2$ den vollen Umfang von 360° in eine ganze ungerade Zahl teilt.

Die ersten und zweiten Periodenlängen werden wie die Bogenlängen und die Lückenlängen hier in Grad angegeben und beziehen sich auf einen jeweiligen Zentriwinkel um die Achse beziehungsweise um den Mittelpunkt.

Vorteilhafterweise ist die erste Lückenlänge kleiner als die zweite Lückenlänge. Weiterhin weist der Verlauf der zweiten Empfängerleiterbahn innerhalb eines ersten Abschnittes eine erste Amplitude und innerhalb eines zweiten Abschnittes eine zweite Amplitude auf. Der erste Abschnitt erstreckt sich ausgehend von dem an die erste Lücke angrenzenden Ende der zweiten Empfängerleiterbahn über einen ersten Winkel. Der zweite Abschnitt erstreckt sich ausgehend von dem an der zweiten Lücke angrenzenden anderen Ende der zweiten Empfängerleiterbahn über einen zweiten Winkel. Dabei ist der erste Winkel kleiner oder gleich wie die halbe zweite Bogenlänge. Zudem ist der zweite Winkel kleiner oder gleich wie die halbe zweite Bogenlänge. Außerdem ist die erste Amplitude kleiner als die zweite Amplitude. Dabei kann das Abtastelement auch so ausgestaltet sein, dass der Verlauf der zweiten Empfängerleiterbahn mehr als die beiden genannten unterschiedlichen Amplituden aufweist. Insbesondere können zwischen dem ersten Abschnitt mit der ersten Amplitude und dem zweiten Abschnitt mit der zweiten Amplitude ein oder mehrere Abschnitte vorliegen, in dem / in denen der Verlauf der zweiten Empfängerleiterbahn zumindest eine weitere Amplitude aufweist. Die Zumindest eine weitere Amplitude kann jeweils eine Zwischengröße aufweisen, so dass der Übergang entlang des Verlaufes der zweiten Empfängerleiterbahnen von der ersten Amplitude auf die zweite Amplitude in kleinen Abstufungen erfolgt.

In weiterer Ausgestaltung der Erfindung weist der Verlauf der vierten Empfängerleiterbahn innerhalb eines dritten Abschnittes eine dritte Amplitude auf und innerhalb eines vierten Abschnittes eine vierte Amplitude. Der dritte Abschnitt erstreckt sich ausgehend von dem an die erste Lücke angrenzenden Ende der vierten Empfängerleiterbahn über einen dritten Winkel. Der vierte Abschnitt erstreckt sich ausgehend von dem an der zweiten Lücke angrenzenden anderen Ende der vierten Empfängerleiterbahn über einen vierten Winkel. Dabei ist der dritte Winkel kleiner oder gleich wie die halbe vierte Bogenlänge. Gleichfalls ist der vierte Winkel kleiner oder gleich wie die halbe vierte Bogenlänge. Überdies ist die dritte Amplitude kleiner als die vierte Amplitude. Auch hier können in Abschnitten zwischen der dritten Amplitude und der vierten Amplitude weitere Amplituden vorliegen, die jeweils eine Zwischengröße aufweisen.

Mit Vorteil ist das Abtastelement so ausgestaltet, dass die zweite Bogenlänge gleich groß ist wie die vierte Bogenlänge.

Gemäß einer alternativen Ausgestaltung der Erfindung sind die zweite Bogenlänge und die vierte Bogenlänge unterschiedlich groß. Dabei ist es vorteilhaft, wenn die erste und die zweite Lückenlänge gleich groß sind. In diesem Fall kann mit Vorteil eine zwischen den zweiten Empfängerleiterbahnen aufgespannte erste Fläche so groß sein wie die von den vierten Empfängerleiterbahnen aufgespannte zweite Fläche. Insbesondere kann der Verlauf der zweiten Empfängerleiterbahn eine erste Amplitude aufweisen und kann der Verlauf der vierten Empfängerleiterbahn eine zweite Amplitude aufweisen. Die erste Amplitude ist vorteilhafterweise kleiner als die zweite Amplitude, sofern die zweite Bogenlänge größer ist als die vierte Bogenlänge.

Signale, die von der ersten, zweiten, dritten oder vierten Empfängerleiterbahnen erzeugbar sind, sind mit Hilfe von elektronischen Bauteilen, die insbesondere eine Auswerteschaltung bilden, weiterverarbeitbar. Das Abtastelement umfasst eine Leiterplatte, wobei die elektronischen Bauteile auf dieser Leiterplatte montiert sind. Die elektronischen Bauteile können Elemente verschiedener elektronischer Schaltungen sein beziehungsweise unterschiedlichen Schaltungen zugeordnet sein. Beispielsweise können bestimmte elektronische Bauteile Elemente der Schaltung zur Generierung eines Erregerstroms sein oder weitere elektronische Bauteile können Elemente einer weiteren Schaltung zur Auswertung beziehungsweise Weiterverarbeitung von Signalen sein.

Gemäß einem weiteren Aspekt umfasst die Erfindung auch eine induktive Winkelmesseinrichtung mit dem Abtastelement und mit einem Skalenelement.

Vorteilhafte Ausbildungen der Erfindung entnimmt man den abhängigen Ansprüchen.

Weitere Einzelheiten und Vorteile des erfindungsgemäßen Abtastelements ergeben sich aus der nachfolgenden Beschreibung zweier Ausführungsbeispiele anhand der beiliegenden Figuren.

## KURZE BESCHREIBUNG DER ZEICHNUNGEN

Figur 1    eine perspektivische Ansicht einer Winkelmesseinrichtung umfassend ein Abtastelement und ein Skalenelement,

Figur 2    eine Draufsicht auf eine Seite des Abtastelements,

Figur 3    eine Draufsicht auf das Skalenelement, bei der unter anderem mehrere Empfängerleiterbahnen ausgeblendet sind,

Figur 4    eine Draufsicht auf eine Seite eines Skalenelements

Figur 5    eine perspektivische Schnittdarstellung des Skalenelements

Figur 6    eine Schnittdarstellung durch eine Bohrung des Skalenelements,

Figur 7    eine Draufsicht auf das Skalenelement, bei der unter anderem mehrere Empfängerleiterbahnen ausgeblendet sind, gemäß einem zweiten Ausführungsbeispiel.

## BESCHREIBUNG DER AUSFÜHRUNGSFORMEN

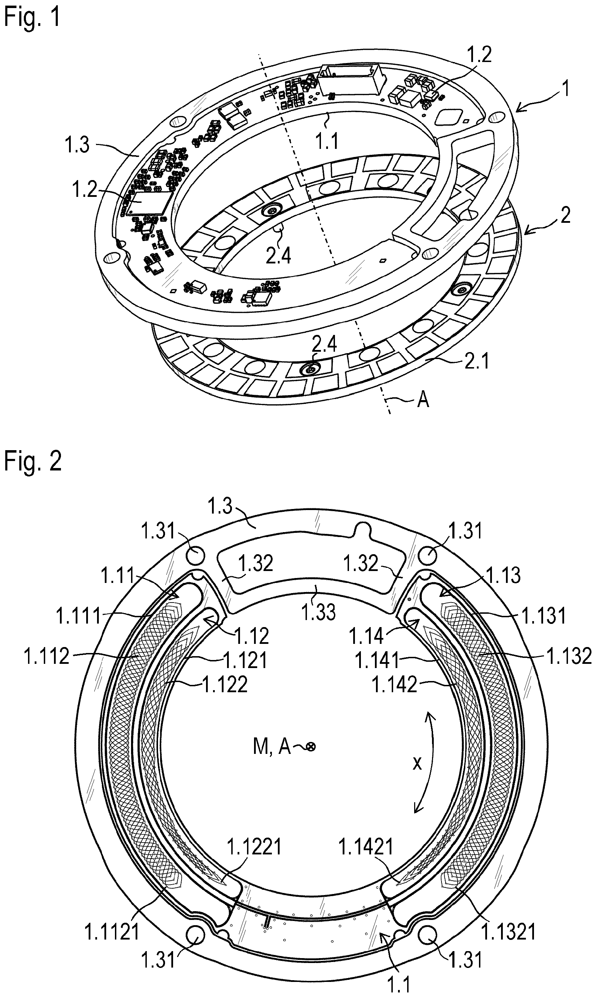

Die Erfindung wird gemäß der Figur 1 anhand einer Winkelmesseinrichtung beschrieben, welche ein Abtastelement 1 aufweist, das zur Erfassung einer Winkelstellung eines Skalenelements 2 verwendet werden kann. Das Skalenelement 2 ist um eine Achse A relativ zum Abtastelement 1 drehbar angeordnet. Eine derartige Winkelmesseinrichtung kann beispielsweise in einer Antriebseinrichtung verwendet werden, wobei das Skalenelement 2 dann etwa mit einer Antriebswelle eines Motors drehfest verbunden wird.

Das Abtastelement 1 umfasst eine Leiterplatte 1.1, welche mehrere Lagen aufweist, sowie elektronische Bauteile 1.2, die auf der Leiterplatte 1.1 montiert sind. Die Leiterplatte 1.1 umfasst zudem einen Rahmen 1.3 als mechanisch tragende Struktur.

Wie auch in der Figur 2 gezeigt, hat die Leiterplatte 1.1 die Form eines Kreisringsegments, das ca. über 300° umlaufend ausgestaltet ist und entsprechend eine Öffnung aufweist. Um diese Leiterplatte 1.1 außen herum angeordnet ist der geschlossene und im wesentlichen ringförmige Rahmen 1.3, hier aus Metall, befestigt, der insbesondere zur mechanischen Verstärkung des Abtastelements 1 dient und Befestigungsbereiche 1.31, hier in Form von Bohrungen, aufweist. Im Bereich der Öffnung der Leiterplatte 1.1 verlaufen parallel zu den Stirnseiten der Leiterplatte 1.1 im Wesentlichen in radialer Richtung Stege 1.32 des Rahmens 1.3. Ein weiterer Steg 1.33 des Rahmens 1.3 verläuft über einen Winkel von etwa 60° in einer Kreissegmentkontur.

Das Abtastelement 1 dient zur Abtastung des ersten Skalenelements 2. Im vorgestellten Ausführungsbeispiel sind die elektronischen Bauteile 1.2 nur auf einer Seite der Leiterplatte 1.1 montiert, nämlich auf der vom Skalenelement 2 abgewandten Seite. Alternativ oder ergänzend könnten aber auch beide Seiten der Leiterplatte 1.1 mit elektronischen Bauteilen 1.2 bestückt werden.

Zur Bestimmung der Winkelinformationen weist gemäß der Figur 2 die Leiterplatte 1.1 eine erste Detektoreinheit 1.11, und eine zweite Detektoreinheit 1.12, eine dritte Detektoreinheit 1.13 und eine vierte Detektoreinheit 1.14 auf. Die Detektoreinheiten 1.11 bis 1.14 haben jeweils eine ringsegmentartige Form, wobei für alle Detektoreinheiten 1.11 bis 1.14 gilt, dass der Mittelpunkt M der jeweiligen ringsegmentartigen Form auf der Achse A liegt. Demnach liegen die Detektoreinheiten 1.11 bis 1.14 bezüglich des Mittelpunkts M in erster Näherung konzentrisch einander gegenüber.

Die erste Detektoreinheit 1.11 umfasst eine erste Erregerspur 1.111 und eine erste Empfängerspur 1.112. Ebenso umfassen die zweite Detektoreinheit 1.12 eine zweite Erregerspur 1.121 und eine zweite Empfängerspur 1.122, die dritte Detektoreinheit 1.13 eine dritte Erregerspur 1.131 und eine dritte Empfängerspur 1.132 sowie die vierte Detektoreinheit 1.14 eine vierte Erregerspur 1.141 und eine vierte Empfängerspur 1.142.

Die Erregerspuren 1.111, 1.121, 1.131, 1.141 umschließen jeweils eine der Empfängerspuren 1.112, 1.122, 1.132, 1.142. Sowohl die Erregerspuren 1.111, 1.121, 1.131, 1.141, als auch die Empfängerspuren 1.112, 1.122, 1.132, 1.142 verlaufen entlang einer Umfangsrichtung x.

Jede der Empfängerspuren 1.112, 1.122, 1.132, 1.142 umfasst im vorgestellten Ausführungsbeispiel jeweils vier Empfängerleiterbahnen 1.1121, 1.1221, 1.1321, 1.1421, die in Umfangsrichtung x versetzt angeordnet sind, so dass diese dem Versatz entsprechend vier phasenverschobene Signale liefern können. Im vorgestellten Ausführungsbeispiel sind innerhalb einer Empfängerspur 1.112, 1.122, 1.132, 1.142 benachbarte Empfängerleiterbahnen 1.1121, 1.1221, 1.1321, 1.1421 um 1/8 der vollen Sinusperiode (um $\pi/4$ oder 45° entlang der Umfangsrichtung x) zueinander versetzt angeordnet.

In den Figuren sind diejenigen Empfängerleiterbahnen 1.1121, 1.1221, 1.1321, 1.1421, welche ein und derselben Empfängerspur 1.112, 1.122, 1.132, 1.142 angehören, mit nur einem Bezugszeichen versehen. Folglich sind also beispielsweise alle Empfängerleiterbahnen 1.1121 der ersten Empfängerspur 1.112 mit nur einem Bezugszeichen versehen. Zudem verlaufen die ersten Empfängerleiterbahnen 1.1121, 1.1221, 1.1321, 1.1421 der Detektoreinheiten 1.11 bis 1.14 mit Vias verbunden in unterschiedlichen Lagen der Leiterplatte 1.1, so dass an Kreuzungspunkten unerwünschte Kurzschlüsse vermieden werden. Wenngleich genau genommen jede der Empfängerleiterbahnen 1.1121, 1.1221, 1.1321, 1.1421 aus vielen Leiterstücken besteht, die jeweils auf zwei Ebenen beziehungsweise Lagen verteilt und aneinandergereiht sind, wird im Folgenden eine derartige Struktur zusammenfassend als eine Empfängerleiterbahn 1.1121, 1.1221, 1.1321, 1.1421 bezeichnet.

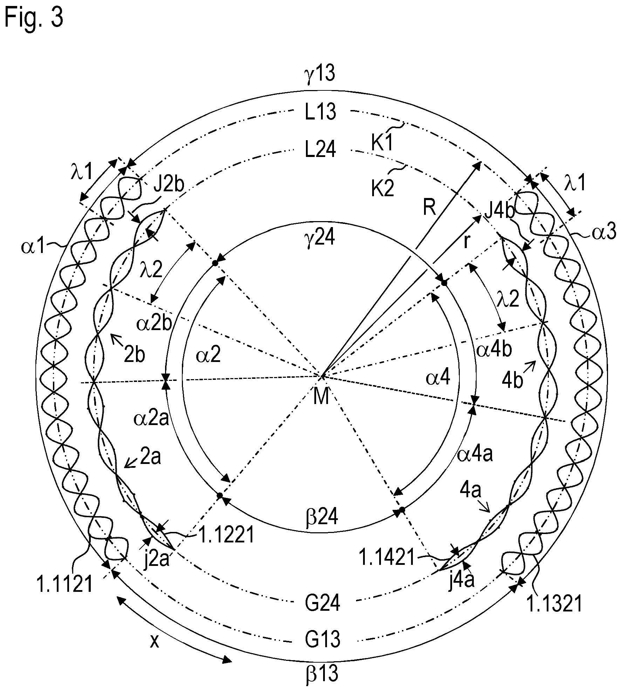

In der Figur 3 ist der Übersichtlichkeit halber jeweils nur eine Empfängerleiterbahn 1.1121, 1.1221, 1.1321, 1.1421 der Empfängerspuren 1.112, 1.122, 1.132, 1.142 gezeigt. Die Folgenden Erläuterungen werden anhand dieser Darstellung einer einzelnen Empfängerleiterbahn 1.1121, 1.1221, 1.1321, 1.1421 vorgenommen, wobei die Gegebenheiten auch für die entsprechend zueinander gehörigen phasenverschobenen Empfängerleiterbahnen 1.1121, 1.1221, 1.1321, 1.1421 zutreffen.

Die erste Empfängerleiterbahn 1.1121 und die dritte Empfängerleiterbahn 1.1321 verlaufen entlang einer ersten Kreislinie K1, die einen ersten Radius R aufweist. Die zweite Empfängerleiterbahn 1.1221 und die vierte Empfängerleiterbahn 1.1421 verlaufen entlang einer zweiten Kreislinie K2, die einen zweiten Radius r aufweist, wobei der zweite Radius r kleiner ist als der erste Radius R, so dass gilt:

$$r < R$$

Beide Kreislinien K1, K2 haben denselben Mittelpunkt M. Die Empfängerleiterbahnen 1.1121, 1.1221, 1.1321, 1.1421 weisen einen räumlich periodischen Verlauf auf, der im Wesentlichen sinusförmig beziehungsweise sinusartig ausgestaltet ist. Die ersten Empfängerleiterbahnen 1.1121 der ersten Empfängerspur 1.112 und die dritten Empfängerleiterbahnen 1.1321 der dritten Empfängerspur 1.132 weisen über ihren Verlauf hinweg eine konstante erste Periodenlänge $\lambda1$ auf. Dagegen weisen die zweiten Empfängerleiterbahnen 1.1221 der zweiten Empfängerspur 1.122 und die vierten Empfängerleiterbahnen 1.1421 der vierten Empfängerspur 1.142 über ihren Verlauf hinweg eine konstante zweite Periodenlänge $\lambda2$ auf. Hier ist die zweite Periodenlänge $\lambda2$ größer als die erste Periodenlänge $\lambda1$.

$$\lambda2 > \lambda1$$

Die Periodenlängen $\lambda1$, $\lambda2$ werden hier in Grad angegeben und beziehen sich auf einen jeweiligen Zentriwinkel um die Achse A beziehungsweise um den Mittelpunkt M. Im vorgestellten Ausführungsbeispiel beträgt

die erste Periodenlänge: $\lambda1 = 360°/32 = 11{,}25°$ und
die zweite Periodenlänge: $\lambda2 = 360°/15 = 24°$.

Demzufolge ist also die erste Periodenlänge $\lambda1$ ein ganzzahliger erster Teiler S von 360°, wobei hier gilt S = 32,

$$S \in \mathbb{N}$$

Analog ist die zweite Periodenlänge $\lambda2$ ein ganzzahliger zweiter Teiler T von 360°, wobei hier gilt T = 15,

$$T \in \mathbb{N}$$

Der erste Teiler S und der zweite Teiler T sind teilerfremd:

$$S \perp T$$

Die zweiten Empfängerleiterbahnen 1.1221 und die vierten Empfängerleiterbahnen 1.1421 sind so angeordnet, dass zwischen diesen in Umfangsrichtung x jeweils eine erste Lücke G24 und eine zweite Lücke L24 vorliegt, wobei sich die zweiten Empfängerleiterbahnen 1.1221 über eine zweite Bogenlänge $\alpha2$ erstrecken und die vierten Empfängerleiterbahnen 1.1421 über eine vierte Bogenlänge $\alpha 4$ erstrecken, dabei gilt im vorgestellten Ausführungsbeispiel:

$$\alpha 2 = p \cdot \lambda 2$$

$$\alpha 4 = q \cdot \lambda 2$$

$$\alpha 2 = \alpha 4, \text{ da } p = q$$

mit

$$p, q \in \mathbb{N}$$

Hier ist p = q = 4, demnach beträgt $\alpha 2$ = 4 x 24° = 96° = $\alpha 4$. Folglich erstrecken sich die zweiten Empfängerleiterbahnen 1.1221 und die die vierten Empfängerleiterbahnen 1.1421 also jeweils über eine gleich große Bogenlänge $\alpha 2$, $\alpha 4$, die hier vier zweiten Periodenlängen $\lambda 2$ entspricht.

Die erste Lücke G24 erstreckt sich über eine erste Lückenlänge $\beta 24$ und die zweite Lücke L24 erstreckt sich über eine zweite Lückenlänge $\gamma 24$. Die erste Lückenlänge $\beta 24$ beträgt ein erstes Vielfaches m der zweiten Periodenlänge $\lambda 2$, wobei hier m = 3 gilt. Zudem beträgt die zweite Lückenlänge $\gamma 24$ ein zweites Vielfaches n, im vorgestellten Ausführungsbeispiel nimmt n den Wert 4 an. Grundsätzlich können für m und n Natürliche Zahlen größer Null eingesetzt werden. Es gilt:

$$\beta 24 = m \cdot \lambda 2$$

$$\gamma 24 = n \cdot \lambda 2$$

$$m \neq n,$$

mit

$$m, n \in \mathbb{N}$$

Außerdem gilt, dass die Summe aus m und n eine ungerade Zahl ergibt, also

$$m + n = 2 \cdot k + 1,$$

mit

$$k \in \mathbb{N}$$

Im Hinblick auf die Bildung eines absoluten Winkelmesswertes, insbesondere zur Bildung eines Anschlusses beziehungsweise auf eine Verknüpfung mit der ersten und dritten Empfängerspur 1.112, 1.132, ist es grundsätzlich vorteilhaft, wenn die Summe aus der zweiten Bogenlänge $\alpha 2$, der vierten Bogenlänge $\alpha 4$, der ersten Lückenlänge $\beta 24$ und der zweiten Lückenlänge $\gamma 24$ ein ungeradzahliges Vielfaches der zweiten Periodenlänge $\lambda 2$ beträgt, beziehungsweise der zweite Teiler T (hier 15) eine ungerade Zahl ist.

$$\alpha 2 + \alpha 4 + \beta 24 + \gamma 24 = (2 \cdot k + 1) \cdot \lambda 2$$

oder

$$p + q + m + n = 2 \cdot k + 1$$

, hier

$$4 + 4 + 4 + 3 = 15 \ (= 2 \cdot 7 + 1)$$

Es ist vorteilhaft, wenn sich die zweiten Empfängerleiterbahnen 1.1221 und die vierten Empfängerleiterbahnen 1.1421 jeweils über eine gleich große Bogenlänge $\alpha2$, $\alpha4$ erstrecken (p = q). Folglich müssen die erste Lückenlänge $\beta24$ und die zweite Lückenlänge $\gamma24$ unterschiedlich groß sein, sofern die Bogenlängen $\alpha2$, $\alpha4$ und die Lückenlängen $\beta24$, $\gamma24$ jeweils ein Vielfaches der zweiten Periodenlänge $\lambda2$ betragen und deren Summe ein ungeradzahliges Vielfaches der zweiten Periodenlänge $\lambda2$ ist. Im vorgestellten Ausführungsbeispiel ist die erste Lückenlänge $\beta24$ kleiner als die zweite Lückenlänge $\gamma24$, so dass gilt:

$$\beta24 < \gamma24$$

oder

$$m < n$$

Vorteilhafterweise ist der Unterschied zwischen der ersten Lückenlänge $\beta24$ und der zweiten Lückenlänge $\gamma24$ minimal, so dass gilt:

$$n - m = 1,$$

oder

$$\gamma24 - \beta24 = \lambda2$$

Die ersten Empfängerleiterbahnen 1.1121 und die dritten Empfängerleiterbahnen 1.1321 sind so angeordnet, dass zwischen diesen in Umfangsrichtung x eine dritte Lücke G13 und eine vierte Lücke L13 vorliegt. Zudem erstrecken sich die ersten Empfängerleiterbahnen 1.1121 über eine erste Bogenlänge $\alpha1$, wobei gilt:

$$\alpha1 = s \cdot \lambda1$$

Die dritten Empfängerleiterbahnen 1.1321 erstrecken sich jeweils über eine dritte Bogenlänge $\alpha3$, wobei gilt:

$$\alpha3 = t \cdot \lambda1$$

$$s = t$$

mit

$$s, t \in \mathbb{N}$$

Im vorgestellten Ausführungsbeispiel ist s = t = 8, so dass also $\alpha1 = 8 \times 11,25° = 90° = \alpha3$ beträgt. Die ersten Empfängerleiterbahnen 1.1121 und die dritten Empfängerleiterbahnen 1.1321 erstrecken sich also jeweils über eine gleich große Bogenlänge $\alpha1$, $\alpha3$, die hier acht ersten Periodenlängen $\lambda1$ entspricht.

Die dritte Lücke G13 erstreckt sich über eine dritte Lückenlänge $\beta13$ und die vierte Lücke L13 erstreckt sich über eine vierte Lückenlänge $\gamma13$. Die dritte Lückenlänge $\beta13$ beträgt ein drittes Vielfaches v der ersten Periodenlänge $\lambda1$. Zudem beträgt die vierte Lückenlänge $\gamma13$ ein viertes Vielfaches w, im vorgestellten Ausführungsbeispiel nehmen v und w jeweils den Wert 8 an. Grundsätzlich können für v und w Natürliche Zahlen größer Null eingesetzt werden. Es gilt:

$$\beta13 = v \cdot \lambda1$$

$$\gamma13 = w \cdot \lambda1$$

hier:

$$v = w,$$

mit

$$v, w \in \mathbb{N}$$

Außerdem gilt im vorgestellten Ausführungsbeispiel, dass v und w eine gerade Zahl sind. Für die Bildung eines absoluten Winkelmesswertes ist es grundsätzlich vorteilhaft, wenn die Summe aus der ersten Bogenlänge $\alpha1$, der dritten Bogenlänge $\alpha3$, der dritten Lückenlänge $\beta13$ und der vierten Lückenlänge $\gamma13$ ein geradzahliges Vielfaches der ersten Periodenlänge $\lambda1$ beträgt, beziehungsweise der erste Teiler S (hier 32) eine gerade Zahl ist.

$$\alpha1 + \alpha3 + \beta13 + \gamma13 = (2 \cdot k) \cdot \lambda2$$

oder

$$s + t + v + w = 2 \cdot k,$$

hier

$$8 + 8 + 8 + 8 = 32 \; (= 2 \cdot 16)$$

mit

$$k \in \mathbb{N}$$

Die dritte Lücke G13 und die vierte Lücke L13 erstrecken sich über ein Vielfaches der ersten Periodenlänge $\lambda1$. Zudem sind die dritte Lücke G13 und die vierte Lücke L13 gleich groß, so dass sich also die dritte Lücke G13 über 90° oder acht erste Periodenlängen $\lambda1$ erstreckt und die vierte Lücke L13 ebenfalls über 90°.

Der Verlauf der zweiten Empfängerleiterbahnen 1.1221 weist entlang der Umfangsrichtung x jeweils unterschiedliche Amplituden j2a, J2b auf. Es liegen also jeweils im Bereich der maximalen Auslenkung unterschiedliche Abstände zwischen der zweiten Kreislinie K2 und der sinusartig verlaufenden zweiten Empfängerleiterbahn 1.1221 vor. Insbesondere weist der Verlauf der zweiten Empfängerleiterbahnen 1.1221 innerhalb eines ersten Abschnittes 2a die erste Amplitude j2a auf, wobei sich der erste Abschnitt 2a ausgehend von dem an die erste Lücke G24 angrenzenden Ende der zweiten Empfängerleiterbahn 1.1221 über einen ersten Winkel $\alpha2a$ erstreckt. Innerhalb eines zweiten Abschnittes 2b weist der Verlauf der zweiten Empfängerleiterbahnen 1.1221 eine zweite Amplitude J2b auf, wobei sich der zweite Abschnitt 2b ausgehend von dem an der zweiten Lücke L24 angrenzenden anderen Ende der zweiten Empfängerleiterbahn 1.1221 über einen zweiten Winkel $\alpha2b$ erstreckt. Dabei sind der erste und der zweite Winkel $\alpha2a$, $\alpha2b$ jeweils kleiner oder gleich der halben zweiten Bogenlänge $\alpha2$. Die erste Amplitude j2a ist kleiner als die zweite Amplitude J2b.

Eine analoge Betrachtung ist auch für die vierten Empfängerleiterbahnen 1.1421 gültig. Demnach weist der Verlauf der vierten Empfängerleiterbahnen 1.1421 entlang der Umfangsrichtung x jeweils unterschiedliche Amplituden j4a, J4b auf. Es liegen also jeweils im Bereich der maximalen Auslenkung unterschiedliche Abstände zwischen der zweiten Kreislinie K2 und der sinusartig verlaufenden vierten Empfängerleiterbahnen 1.1421 vor. Insbesondere weist der Verlauf der vierten Empfängerleiterbahnen 1.1421 innerhalb eines dritten Abschnittes 4a die dritte Amplitude j4a auf, wobei sich der dritte Abschnitt 4a ausgehend von dem an die erste Lücke G24 angrenzenden Ende der vierten Empfängerleiterbahn 1.1421 über einen ersten Winkel $\alpha4a$ erstreckt. Innerhalb eines vierten Abschnittes 4b weist der Verlauf der vierten Empfängerleiterbahnen 1.1421 eine vierte Amplitude J4b auf, wobei sich der vierte Abschnitt 4b ausgehend von dem an der zweiten Lücke L24 angrenzenden anderen Ende der vierten Empfängerleiterbahn 1.1421 über einen vierten Winkel $\alpha4b$ erstreckt. Dabei sind der erste und der vierte Winkel $\alpha4a$, $\alpha4b$ jeweils kleiner oder gleich der halben vierten Bogenlänge $\alpha4$ und die dritte Amplitude j4a ist kleiner als die vierte Amplitude J4b. Demnach gilt im vorgestellten Ausführungsbeispiel:

$$j2a = j4a$$

$$J2b = J4b$$

Im vorgestellten Ausführungsbeispiel weisen die zweiten und die vierten Empfängerleiterbahnen 1.1221, 1.1421 nicht nur zwei unterschiedliche Amplituden j4a, J4b auf. In den Bereichen zwischen den beiden genannten Amplituden j4a, J4b befinden sich innerhalb jeweils einer zweiten Periodenlänge $\lambda2$ Amplituden, die eine Zwischengröße aufweisen, also kleiner sind als die zweite Amplitude J2b beziehungsweise vierte Amplitude J4b und größer sind als die erste Amplitude j2a beziehungsweise dritte Amplitude j4a.

Im vorgestellten Ausführungsbeispiel ist die zwischen den zweiten Empfängerleiterbahnen 1.1221 aufgespannte Fläche, also die Summe der Einzelflächen zwischen den sinusförmigen zweiten Empfängerleiterbahnen 1.1221 (Summe aller linsenförmigen Teilflächen), ähnlich oder gleich groß wie die von den vierten Empfängerleiterbahnen 1.1421 aufgespannte Fläche.

Die Empfängerleiterbahnen 1.1121, 1.1221, 1.1321, 1.1421 sind elektrisch so verschaltet, dass diese zum einen 0° und 90°-Signale liefern und zum anderen 45° und 135°-Signale. Aus den 0° und 90°-Signalen kann ein erstes Positionssignal bestimmt werden und aus den 45° und 135°-Signalen kann ein bezüglich des ersten Positionssignals redundantes zweites Positionssignal bestimmt werden. Zudem sind die ersten Empfängerleiterbahnen 1.1121 der ersten Empfängerspur 1.112 und die dritten Empfängerleiterbahnen 1.1321 der dritten Empfängerspur 1.132 analog seriell miteinander verschaltet. Ebenso sind die zweiten Empfängerleiterbahnen 1.1221 der zweiten Empfängerspur 1.122 und die vierten Empfängerleiterbahnen 1.1421 der vierten Empfängerspur 1.142 analog seriell miteinander verschaltet. Die Auswertung der von den miteinander verschalteten Empfängerleiterbahnen 1.1121, 1.1221, 1.1321, 1.1421 erzeugten Signale erfolgt über einen gemeinsamen Auswerte-ASIC, so dass auf diese Weise eine absolute Position errechnet wird.

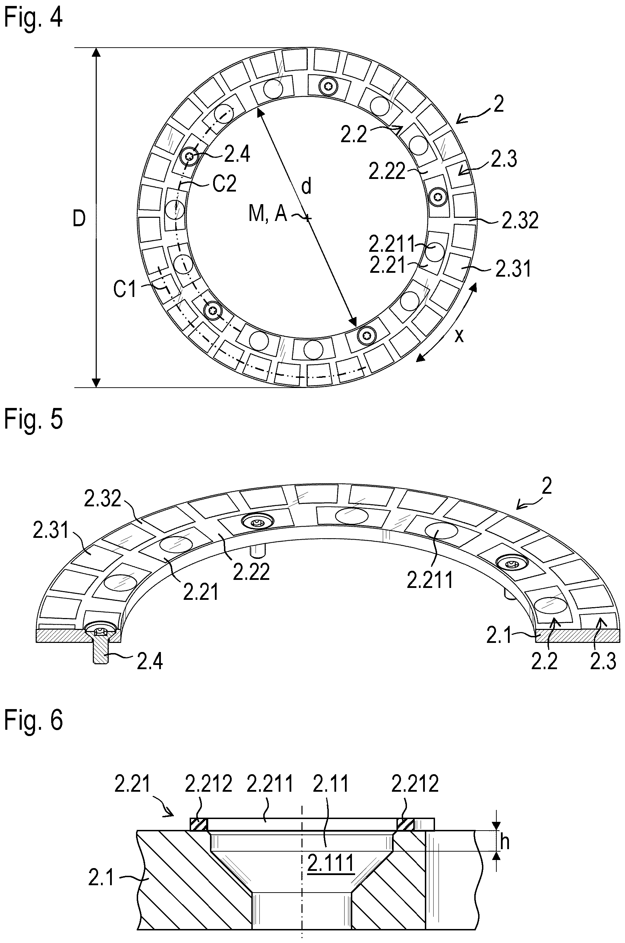

In der Figur 4 ist das Skalenelement 2 in einer Draufsicht gezeigt. Das Skalenelement 2 weist eine ringförmige beziehungsweise kreisringförmige Gestalt auf mit einem Innendurchmesser d und einem Außendurchmesser D. Im vorgestellten Ausführungsbeispiel ist der Innendurchmesser d verhältnismäßig groß, so dass hier gilt: D/d = 1,4.

Das Skalenelement 2 besteht aus einem Substrat 2.1 (Figur 5), welches im dargestellten Ausführungsbeispiel aus Epoxidharz hergestellt ist und auf dem zwei Teilungsspuren 2.2, 2.3 angeordnet sind. Die Teilungsspuren 2.2, 2.3 sind ringförmig ausgebildet und bezüglich der Achse A konzentrisch mit unterschiedlichen Radien auf dem Substrat 2.1 angeordnet, so dass die erste Teilungsspur 2.2 entlang der zweiten Teilungskreislinie C2 verläuft und die zweite Teilungsspur 2.3 entlang der ersten Teilungskreislinie C1 verläuft. Die Teilungsspuren 2.2, 2.3 umfassen Teilungsstrukturen bestehend aus jeweils einer periodischen Abfolge von entlang der Umfangsrichtung x alternierend angeordneten elektrisch leitfähigen Teilungsbereichen 2.21, 2.31 und nichtleitfähigen Teilungsbereichen 2.22, 2.32, wobei die elektrisch leitfähigen Teilungsbereiche 2.21, 2.31, jeweils aus einer Schicht aus elektrisch leitfähigem Material gebildet sind. Als Material für die elektrisch leitfähigen Teilungsbereiche 2.21, 2.31 wurde im gezeigten Beispiel Kupfer auf das Substrat 2.1 aufgebracht. In den nichtleitfähigen Teilungsbereichen 2.22, 2.32 ist das Substrat 2.1 dagegen nicht beschichtet.

Durch die Anordnung mit jeweils zwei Teilungsspuren 2.2, 2.3 kann die Winkelstellung des Skalenelements 2 absolut bestimmt werden. Die äußere Teilungsspur 2.3 des Skalenelements 2 weist die größere Anzahl von jeweiligen Teilungsbereichen 2.31, 2.32 entlang der Umfangsrichtung x auf, so dass durch diese die größere Auflösung bezüglich der Messung der Winkelstellung erzielbar ist. Im vorgestellten Ausführungsbeispiel weist die zweite (äußere) Teilungsspur 2.3 ein geradzahliges Vielfaches der ersten Periodenlänge $\lambda 1$ auf, nämlich 32, entsprechend der Summe s + t + v + w, die für die Auslegung der Geometrie der ersten und dritten Empfängerleiterbahnen 1.1121, 1.1321 zugrunde gelegt worden ist. Dagegen weist die erste (innere) Teilungsspur 2.2 die kleinere Anzahl von jeweiligen Teilungsbereichen 2.31, 2.32 entlang der Umfangsrichtung x auf, hier 15. Dies entspricht der Summe p + q + m + n, die für die Auslegung der zweiten Empfängerleiterbahnen 1.1221 und vierten Empfängerleiterbahnen 1.1421 maßgeblich ist.

Die elektrisch leitfähigen Teilungsbereiche 2.21 der ersten (inneren) Teilungsspur 2.2 weisen jeweils eine Öffnung 2.211 auf, so dass also die Schicht aus elektrisch leitendem Material an dieser Stelle geöffnet ist beziehungsweise das Substrat 2.1 in diesem Bereich nicht beschichtet ist. Die elektrisch leitfähigen Teilungsbereiche 2.21 sind so ausgestaltet beziehungsweise angeordnet, dass jeweils die Öffnung 2.211 von dem elektrisch leitfähigen Teilungsbereich 2.21 umschlossen ist. Die Öffnungen 2.211 sind so angeordnet, dass diese jeweils den gleichen Abstand zum Mittelpunkt M aufweisen, und entlang der zweiten Teilungskreislinie C2 in Umfangsrichtung x äquidistant (hier in einem Abstand von jeweils 24°) angeordnet sind. Das elektrisch leitfähige Material umschließt die Öffnung 2.211, so dass sich beidseitig um die Öffnung 2.211 herum Stege 2.212 (siehe Figur 6) aus elektrisch leitfähigem Material befinden und um die Öffnung 2.211 herum eine geschlossene Kontur aus elektrisch leitfähigem Material vorliegt.

In einer Teilanzahl, hier fünf, der elektrisch leitfähigen Teilungsbereiche 2.21 sind jeweils durch eine Öffnung 2.211 hindurch Bohrungen 2.11 im Substrat 2.1 angeordnet. Die Bohrungen 2.11 sind also entlang der ersten (inneren) Teilungsspur 2.2 beziehungsweise entlang der zweiten Teilungskreislinie C2 im Substrat 2.1 angeordnet, im vorgestellten Ausführungsbeispiel sind fünf Bohrungen 2.11 vorgesehen, die jeweils den gleichen Abstand zum Mittelpunkt M aufweisen und entlang der zweiten Teilungskreislinie C2 äquidistant (hier in einem Abstand von 72°) angeordnet sind.

In der Figur 6 ist ein Detailschnitt durch einen Teil des Skalenelementes 2 im Bereich der ersten Teilungsspur 2.2 gezeigt, wobei in der Figur 6 die Dicke der Schicht aus elektrisch leitendem Material des elektrisch leitfähigen Teilungsbereichs 2.21 zur Erläuterung übertrieben groß dargestellt ist. Die Bohrung 2.11 ist hier jeweils als eine abgesetzte Durchgangsbohrung ausgestaltet. Insbesondere weist die Bohrung 2.11 einen konischen Bereich 2.111 auf, der beispielsweise durch eine Senkbearbeitung hergestellt wird. Der konische Bereich 2.111 ist bezüglich der Oberfläche des Substrats 2.1 beziehungsweise in axialer Richtung um ein Maß h zurückversetzt angeordnet. Dadurch kann in der jeweiligen Bohrung 2.11 ein Befestigungselement 2.4 angeordnet werden, das hier jeweils als eine Schraube (insbesondere Senkkopfschraube) ausgebildet ist, wobei das Befestigungselement 2.4 bezüglich der Oberfläche des Substrats 2.1 und bezüglich der Oberfläche des jeweiligen elektrisch leitfähigen Teilungsbereichs 2.21 zurückversetzt ist. Das Befestigungselement 2.4 dient zur Befestigung des Skalenelements 2 an einem Maschinenteil und ist hier aus Stahl gefertigt und demnach elektrisch leitend.

Im zusammengebauten Zustand stehen sich das Abtastelement 1 und das Skalenelement 2 mit axialem Abstand beziehungsweise Luftspalt gegenüber, so dass bei einer Relativdrehung zwischen dem Skalenelement 2 und dem Abtastelement 1 in den Empfängerleiterbahnen 1.1121, 1.1221, 1.1321, 1.1421 jeweils ein von der jeweiligen Winkelposition abhängiges Signal durch Induktionseffekte erzeugbar ist. Voraussetzung für die Bildung von entsprechenden Signalen ist, dass die Erregerspuren 1.111, 1.121, 1.131, 1.141 ein zeitlich wechselndes elektromagnetisches Erregerfeld im Bereich der jeweilig abgetasteten Teilungsstrukturen erzeugen. Im dargestellten Ausführungsbeispiel sind die Erregerspuren 1.111, 1.121, 1.131, 1.141 als mehrere planarparallele stromdurchflossene Einzel-Leiterbahnen ausgebildet. Das Abtastelement 1 weist eine elektronische Schaltung mit den elektronischen Bauteilen 1.2 auf, die miteinander elektrisch verbunden sind. Die elektronische Schaltung kann beispielsweise auch einen ASIC-Baustein umfassen. Die Signale, die von den Empfängerspuren 1.112, 1.122, 1.132, 1.142 erzeugt werden, werden mit Hilfe von einigen der elektronischen Bauteile 1.2, die eine Auswerteschaltung bilden, weiterverarbeitet. Diese elektronische Schaltung des Abtastelements 1 arbeitet nicht nur als Auswerteelement, sondern auch als Erregerkontrollelement, unter dessen Kontrolle der Erregerstrom generiert beziehungsweise erzeugt wird, welcher dann durch die Erregerspuren 1.111, 1.121, 1.131, 1.141 fließt. Somit werden die Erregerspuren 1.111, 1.121, 1.131, 1.141 durch ein und dasselbe Erregerkontrollelement bestromt.

Werden die Erregerspuren 1.111, 1.121, 1.131, 1.141 bestromt, so bildet sich um die Erregerspuren 1.111, 1.121, 1.131, 1.141 ein schlauch- bzw. zylinderförmig orientiertes elektromagnetisches Feld aus. Die Feldlinien des resultierenden elektromagnetischen Feldes verlaufen um die Erregerspuren 1.111, 1.121, 1.131, 1.141, wobei die Richtung der Feldlinien in bekannter Art und Weise von der Stromrichtung in den Erregerspuren 1.111, 1.121, 1.131, 1.141 abhängt. Im Bereich der elektrisch leitfähigen Teilungsbereiche 2.21, 2.31 werden Wirbelströme induziert, so dass jeweils eine von der Winkelstellung abhängige Modulation des Feldes erreicht wird. Entsprechend kann durch die Empfängerspuren 1.112, 1.122, 1.132, 1.142 jeweils die relative Winkelstellung gemessen werden. Die spezielle Ausgestaltung der ersten elektrisch leitfähigen Teilungsbereiche 2.21, insbesondere die Positionierung und Dimensionierung der Öffnungen 2.211 stellt eine geeignete Ausbildung der Wirbelströme sicher, die um die Öffnung 2.211 über 360° herum insbesondere in den Stegen 2.212 aus elektrisch leitfähigem Material fließen können. Durch die Erfindung kann also eine vergleichsweise kompakte Bauweise des Skalenelementes 2 erreicht werden, ohne dass die Messgenauigkeit merklich reduziert wird. Denn obwohl die Befestigungselemente 2.4 in der ersten Teilungsspur 2.2 integriert sind, beeinträchtigen diese nicht das Messergebnis. Insbesondere ist es in diesem Zusammenhang auch von Vorteil, dass diejenigen elektrisch leitfähigen Teilungsbereiche 2.21, die keine Bohrung aufweisen die gleiche Öffnung 2.211 aufweisen, wie die Teilungsbereiche 2.21 mit den Bohrungen 2.11 und mit den Befestigungselementen 2.4. Zudem ist es auch vorteilhaft, dass die Befestigungselemente 2.4 in axialer Richtung zurückversetzt sind.

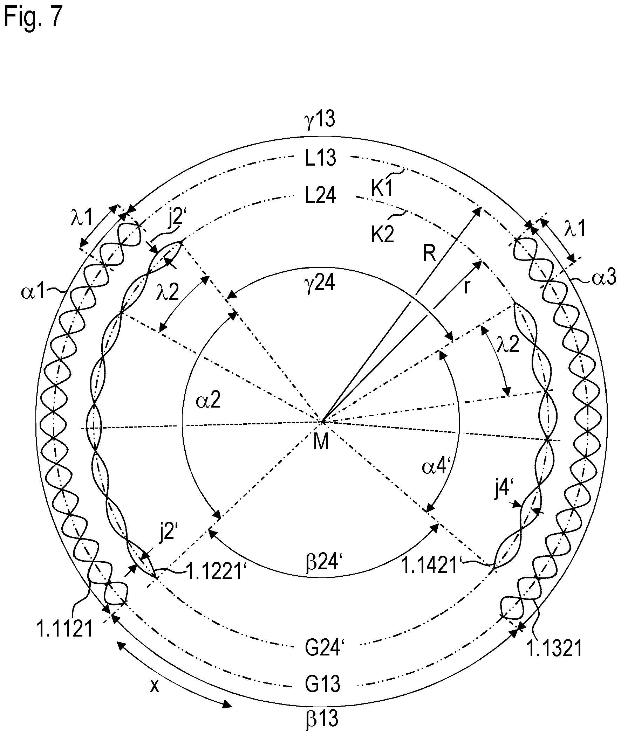

In der Figur 7 ist ein Abtastelement 1 gemäß einem zweiten Ausführungsbeispiel gezeigt, das sich durch die Ausgestaltung der zweiten und vierten Detektoreinheiten 1.12, 1.14 vom ersten Ausführungsbeispiel unterscheidet.

Gemäß dem zweiten Ausführungsbeispiel erstrecken sich die zweiten Empfängerleiterbahnen 1.1221 über eine zweite Bogenlänge $\alpha 2$ und die vierten Empfängerleiterbahnen 1.1421 über eine vierte Bogenlänge $\alpha 4'$, dabei gilt im vorgestellten Ausführungsbeispiel:

$$\alpha 2 = p \cdot \lambda 2$$

$$\alpha 4' = q' \cdot \lambda 2$$

$$p \neq q'$$

mit

$$p, q' \in \mathbb{N}$$

Hier ist p = 4 und q' = 3, demnach beträgt $\alpha 2$ = 4 x 24° = 96° und $\alpha 4'$ = 3 x 24° = 72°. Somit folgt hier:

$$\alpha 2 > \alpha 4'$$

Die erste Lücke G24' erstreckt sich über eine erste Lückenlänge $\beta 24'$ und die zweite Lücke L24 erstreckt sich über eine zweite Lückenlänge $\gamma 24$. Die erste Lückenlänge $\beta 24'$ beträgt ein erstes Vielfaches m' der zweiten Periodenlänge

$\lambda2$, wobei hier m' = 4 gilt. Zudem beträgt die zweite Lückenlänge $\gamma24$ ein zweites Vielfaches n, im vorgestellten zweiten Ausführungsbeispiel nimmt n ebenfalls den Wert 4 an. Grundsätzlich können für m' und n Natürliche Zahlen größer Null eingesetzt werden. Es gilt:

$$\beta24' = m'\cdot\lambda2$$

$$\gamma24 = n\cdot\lambda2$$

$$m' = n,$$

mit

$$m', n \in \mathbb{N}$$

Auch im zweiten Ausführungsbeispiel gilt, dass es im Hinblick auf die Bildung eines absoluten Winkelmesswertes grundsätzlich vorteilhaft ist, wenn die Summe aus der zweiten Bogenlänge $\alpha2$, der vierten Bogenlänge $\alpha4'$, der ersten Lückenlänge $\beta24'$ und der zweiten Lückenlänge $\gamma24$ ein ungeradzahliges Vielfaches der zweiten Periodenlänge $\lambda2$ beträgt (hier 15).

$$\alpha2 + \alpha4' + \beta24' + \gamma24 = (2\cdot k+1)\cdot\lambda2$$

oder

$$p + q' + m' + n = 2\cdot k + 1,$$

hier

$$4 + 3 + 4 + 4 = 15 (= 2\cdot7 + 1)$$

Im vorgestellten Ausführungsbeispiel ist die erste Lückenlänge $\beta24'$ gleich der zweiten Lückenlänge $\gamma24$, so dass gilt:

$$\beta24' = \gamma24$$

Vorteilhafterweise ist der Unterschied zwischen der zweiten Bogenlänge $\alpha2$ und der vierten Bogenlänge $\alpha4'$ minimal, so dass gilt:

$$p - q' = 1,$$

oder

$$\alpha2 - \alpha4' = \lambda2$$

Der Verlauf der zweiten Empfängerleiterbahnen 1.1221' weist entlang der Umfangsrichtung x im vorgestellten zweiten Ausführungsbeispiel gleich große Amplituden j2' auf. Es liegen also entlang der Umfangsrichtung x jeweils im Bereich der maximalen Auslenkung gleiche Abstände zwischen der zweiten Kreislinie K2 und der sinusartig verlaufenden zweiten Empfängerleiterbahn 1.1221' vor.
Eine analoge Betrachtung ist auch für die vierten Empfängerleiterbahnen 1.1421' gültig. Infolgedessen weist der Verlauf der vierten Empfängerleiterbahnen 1.1421' entlang der Umfangsrichtung x jeweils gleich große Amplituden j4' auf. Allerdings gilt im vorgestellten zweiten Ausführungsbeispiel:

$$j2' \neq j4',$$

Insbesondere gilt für $\alpha2 > \alpha4'$:

$$j2' < j4'$$

Grundsätzlich ist es vorteilhaft, wenn die zwischen den zweiten Empfängerleiterbahnen 1.1221' aufgespannte Fläche (Summe aller linsenförmigen Teilflächen) ähnlich oder gleich groß ist wie die von den vierten Empfängerleiterbahnen 1.1421' aufgespannte Fläche. Im vorgestellten zweiten Ausführungsbeispiel erstrecken sich die zweiten Empfängerleiterbahnen 1.1221' über vier zweite Periodenlängen $\lambda2$ und die vierten Empfängerleiterbahnen 1.1421' über nur drei zweite Periodenlängen $\lambda2$. Zur Kompensation ist die Amplitude j2' der zweiten Empfängerleiterbahnen 1.1221' kleiner als die Amplitude j4' der vierten Empfängerleiterbahnen 1.1421', so dass die von den zweiten Empfängerleiterbahnen 1.1221' aufgespannte Fläche in der Gesamtheit etwa gleich groß ist wie die insgesamt von den vierten Empfängerleiterbahnen 1.1421' aufgespannte Fläche.

**Patentansprüche**

1.  Abtastelement (1) für eine induktive Winkelmesseinrichtung, welches

    eine erste Detektoreinheit (1.11) aufweist, die eine erste Empfängerleiterbahn (1.1121) umfasst,
    eine zweite Detektoreinheit (1.12) aufweist, die eine zweite Empfängerleiterbahn (1.1221; 1.1221') umfasst, wobei sich die zweite Empfängerleiterbahn (1.1221; 1.1221') über eine zweite Bogenlänge ($\alpha2$) erstreckt,
    eine dritte Detektoreinheit (1.13) aufweist, die eine dritte Empfängerleiterbahn (1.1321) umfasst und
    eine vierte Detektoreinheit (1.14) aufweist, die eine vierte Empfängerleiterbahn (1.1421; 1.1421') umfasst, wobei sich die vierte Empfängerleiterbahn (1.1421; 1.1421') über eine vierte Bogenlänge ($\alpha4$, $\alpha4'$) erstreckt, wobei der Verlauf der ersten Empfängerleiterbahn (1.1121) und der dritten Empfängerleiterbahn (1.1321) entlang einer ersten Kreislinie (K1) mit einem ersten Radius (R) periodisch ausgestaltet ist, wobei die erste Empfängerleiterbahn (1.1121) und die dritte Empfängerleiterbahn (1.1321) so angeordnet sind, dass zwischen diesen in Umfangsrichtung (x) eine dritte Lücke (G13) mit einer dritten Lückenlänge ($\beta13$) und eine vierte Lücke (L13) mit der vierten Lückenlänge ($\gamma13$) vorliegt, wobei der Verlauf der zweiten Empfängerleiterbahn (1.1221; 1.1221') und der vierten Empfängerleiterbahn (1.1421; 1.1421') entlang einer zweiten Kreislinie (K2) mit einem zweiten Radius (r) periodisch ausgestaltet ist, wobei die zweite Empfängerleiterbahn (1.1221; 1.1221') und die vierte Empfängerleiterbahn (1.1421; 1.1421') so angeordnet sind, dass zwischen diesen in Umfangsrichtung (x) eine erste Lücke (G24; G24') mit einer ersten Lückenlänge $\beta24$ oder $\beta24'$ und eine zweite Lücke (L24) mit einer zweiten Lückenlänge $\gamma24$ vorliegt, wobei der erste Radius (R) und der zweite Radius (r) unterschiedlich sind, und die erste Lückenlänge $\beta24$ oder $\beta24'$ und die zweite Lückenlänge $\gamma24$ unterschiedlich groß sind oder die zweite Bogenlänge ($\alpha2$) und die vierte Bogenlänge ($\alpha4'$) unterschiedlich groß sind, wobei die zweite Empfängerleiterbahn (1.1221; 1.1221') und die vierte Empfängerleiterbahn (1.1421; 1.1421') jeweils einen periodischen Verlauf mit einer konstanten zweiten Periodenlänge $\lambda2$ aufweisen und die erste Lückenlänge $\beta24$ oder $\beta24'$ ein Vielfaches m oder m' der zweiten Periodenlänge $\lambda2$ beträgt und die zweite Lückenlänge $\gamma24$ ein Vielfaches n der zweiten Periodenlänge $\lambda2$ beträgt, so dass gilt:

    $\beta24 = m\cdot\lambda2$ und $\gamma24 = n\cdot\lambda2$, oder
    $\beta24' = m'\cdot\lambda2$ und $\gamma24 = n\cdot\lambda2$
    mit m, m', n als Natürliche Zahlen größer Null.

2.  Abtastelement (1) gemäß dem Anspruch 1, wobei die zweite Empfängerleiterbahn (1.1221; 1.1221') und die vierte Empfängerleiterbahn (1.1421; 1.1421') jeweils einen periodischen Verlauf mit einer konstanten zweiten Periodenlänge ($\lambda2$) aufweisen, wobei die zweite Periodenlänge ($\lambda2$) ein zweiter Teiler (T) von 360° ist.

3.  Abtastelement (1) gemäß dem Anspruch 2, wobei der zweite Teiler (T) eine ungerade Zahl ist.

4.  Abtastelement (1) gemäß einem der vorhergehenden Ansprüche, wobei die zweite Empfängerleiterbahn (1.1221; 1.1221') und die vierte Empfängerleiterbahn (1.1421; 1.1421') jeweils einen periodischen Verlauf mit einer konstanten zweiten Periodenlänge ($\lambda2$) aufweisen und die zweite Bogenlänge $\alpha2$ ein Vielfaches der zweiten Periodenlänge $\lambda2$ beträgt und die vierte Bogenlänge $\alpha4$ oder $\alpha4'$ ein Vielfaches der zweiten Periodenlänge $\lambda2$ beträgt, so dass gilt:

    $\alpha2 = p\cdot\lambda2$ und $\alpha4 = q\cdot\lambda2$, oder
    $\alpha2 = p\cdot\lambda2$ und $\alpha4' = q'\cdot\lambda2$
    mit p, q, q' als Natürliche Zahlen größer Null.

5. Abtastelement (1) gemäß einem der vorhergehenden Ansprüche,
wobei die dritte Lückenlänge ($\beta$13) gleich groß ist wie die vierte Lückenlänge ($\gamma$13).

6. Abtastelement (1) gemäß einem der vorhergehenden Ansprüche , wobei sich die erste Empfängerleiterbahn (1.1121) über eine erste Bogenlänge ($\alpha$1) erstreckt und sich die dritte Empfängerleiterbahn (1.1321) über eine dritte Bogenlänge ($\alpha$3) erstreckt und die erste Bogenlänge ($\alpha$1) gleich groß ist wie die dritte Bogenlänge ($\alpha$3).

7. Abtastelement (1) gemäß einem der vorhergehenden Ansprüche, wobei die erste Empfängerleiterbahn (1.1121) und die dritte Empfängerleiterbahn (1.1321) jeweils einen periodischen Verlauf mit einer konstanten ersten Periodenlänge ($\lambda$1) aufweisen, wobei die erste Periodenlänge ($\lambda$1) ein erster Teiler (S) von 360° ist.

8. Abtastelement (1) gemäß dem Anspruch 7, wobei der erste Teiler (S) eine gerade Zahl ist.

9. Abtastelement (1) gemäß einem der vorhergehenden Ansprüche, wobei

die erste Lückenlänge ($\beta$24) kleiner ist als die zweite Lückenlänge ($\gamma$24),
der Verlauf der zweiten Empfängerleiterbahn (1.1221) innerhalb eines ersten Abschnittes (2a) eine erste Amplitude (j2a) und innerhalb eines zweiten Abschnittes (2b) eine zweite Amplitude (J2b) aufweist, wobei
sich der erste Abschnitt (2a) ausgehend von dem an die erste Lücke (G24) angrenzenden Ende der zweiten Empfängerleiterbahn (1.1221) über einen ersten Winkel ($\alpha$2a) erstreckt und
sich der zweite Abschnitt (2b) ausgehend von dem an der zweiten Lücke (L24) angrenzenden anderen Ende der zweiten Empfängerleiterbahn (1.1221) über einen zweiten Winkel ($\alpha$2b) erstreckt, wobei
der erste und der zweite Winkel ($\alpha$2a, $\alpha$2b) jeweils kleiner oder gleich ist wie die halbe zweite Bogenlänge ($\alpha$2) und die erste Amplitude (j2a) kleiner ist als die zweite Amplitude (J2b).

10. Abtastelement (1) gemäß einem der vorhergehenden Ansprüche, wobei der Verlauf der vierten Empfängerleiterbahn (1.1421) innerhalb eines dritten Abschnittes (4a) eine dritte Amplitude (j4a) und innerhalb eines vierten Abschnittes (4b) eine vierte Amplitude (J4b) aufweist, wobei

sich der dritte Abschnitt (4a) ausgehend von dem an die erste Lücke (G24) angrenzenden Ende der vierten Empfängerleiterbahn (1.1421) über einen dritten Winkel ($\alpha$4a) erstreckt und
sich der vierte Abschnitt (4b) ausgehend von dem an der zweiten Lücke (L24) angrenzenden anderen Ende der vierten Empfängerleiterbahn (1.1421) über einen vierten Winkel ($\alpha$4b) erstreckt, wobei
der dritte und der vierte Winkel ($\alpha$4a, $\alpha$4b) jeweils kleiner oder gleich ist wie die halbe vierte Bogenlänge ($\alpha$4) und die dritte Amplitude (j4a) kleiner ist als die vierte Amplitude (J4b).

11. Abtastelement (1) gemäß einem der vorhergehenden Ansprüche, wobei die zweite Bogenlänge ($\alpha$2) gleich groß ist wie die vierte Bogenlänge ($\alpha$4).

12. Abtastelement (1) gemäß einem der Ansprüche 1 bis 8, wobei die zweite Bogenlänge ($\alpha$2) und die vierte Bogenlänge ($\alpha$4') unterschiedlich groß sind.

13. Abtastelement (1) gemäß dem Anspruch 12, wobei die erste Lückenlänge ($\beta$24') und die zweite Lückenlänge ($\gamma$24) gleich groß sind.

14. Abtastelement (1) gemäß dem Anspruch 12 oder 13, wobei eine zwischen den zweiten Empfängerleiterbahnen (1.1221') aufgespannte erste Fläche so groß ist wie die von den vierten Empfängerleiterbahnen (1.1421') aufgespannte zweite Fläche.

15. Abtastelement (1) gemäß dem Anspruch 12, 13 oder 14, wobei die zweite Bogenlänge ($\alpha$2) größer ist als die vierte Bogenlänge ($\alpha$4'), wobei

der Verlauf der zweiten Empfängerleiterbahn (1.1221') eine erste Amplitude (j2') aufweist und
der Verlauf der vierten Empfängerleiterbahn (1.1421') eine zweite Amplitude (j4') aufweist, wobei die erste Amplitude (j2') kleiner ist als die zweite Amplitude (j4').

## EP 4 421 453 B1

**Claims**

1. Scanning element (1) for an inductive angle measuring device, which

   has a first detector unit (1.11) comprising a first receiver conductor track (1.1121),
   has a second detector unit (1.12) comprising a second receiver conductor track (1.1221; 1.1221'), the second receiver conductor track (1.1221; 1.1221') extending over a second arc length ($\alpha$2),
   has a third detector unit (1.13) comprising a third receiver conductor track (1.1321), and
   has a fourth detector unit (1.14) comprising a fourth receiver conductor track (1.1421; 1.1421'), the fourth receiver conductor track (1.1421; 1.1421') extending over a fourth arc length ($\alpha$4, $\alpha$4'), wherein
   the characteristic of the first receiver conductor track (1.1121) and of the third receiver conductor track (1.1321) along a first circular line (K1) having a first radius (R) is periodic, the first receiver conductor track (1.1121) and the third receiver conductor track (1.1321) being arranged in such a way that there is a third gap (G13) having a third gap length ($\beta$13) and a fourth gap (L13) having the fourth gap length ($\gamma$13) between them in the circumferential direction (x), wherein
   the characteristic of the second receiver conductor track (1.1221; 1.1221') and of the fourth receiver conductor track (1.1421; 1.1421') along a second circular line (K2) having a second radius (r) is periodic, the second receiver conductor track (1.1221; 1.1221') and the fourth receiver conductor track (1.1421; 1.1421') being arranged in such a way that there is a first gap (G24; G24') having a first gap length $\beta$24 or $\beta$24' and a second gap (L24) having a second gap length $\gamma$24 between them in the circumferential direction (x), wherein
   the first radius (R) and the second radius (r) are different, and
   the first gap length $\beta$24 or $\beta$24' and the second gap length $\gamma$24 are of different magnitude or the second arc length ($\alpha$2) and the fourth arc length ($\alpha$4') are of different magnitude,
   wherein the second receiver conductor track (1.1221; 1.1221') and the fourth receiver conductor track (1.1421; 1.1421') each have a periodic characteristic having a constant second period length $\lambda$2, and the first gap length $\beta$24 or $\beta$24' is a multiple m or m' of the second period length $\lambda$2, and the second gap length $\gamma$24 is a multiple n of the second period length $\lambda$2, so that it holds true that:

   $\beta$24 = m$\cdot\lambda$2 and $\gamma$24 = n$\cdot\lambda$2, or
   $\beta$24' = m' $\cdot\lambda$2 and $\gamma$24 = n$\cdot\lambda$2
   with m, m', n as natural numbers greater than zero.

2. Scanning element (1) according to Claim 1, wherein the second receiver conductor track (1.1221; 1.1221') and the fourth receiver conductor track (1.1421; 1.1421') each have a periodic characteristic having a constant second period length ($\lambda$2), the second period length ($\lambda$2) being a second factor (T) of 360°.

3. Scanning element (1) according to Claim 2, wherein the second factor (T) is an odd number.

4. Scanning element (1) according to one of the preceding claims, wherein the second receiver conductor track (1.1221; 1.1221') and the fourth receiver conductor track (1.1421; 1.1421') each have a periodic characteristic having a constant second period length ($\lambda$2), and the second arc length $\alpha$2 is a multiple of the second period length $\lambda$2, and the fourth arc length $\alpha$4 or $\alpha$4' is a multiple of the second period length $\lambda$2, so that it holds true that:

   $\alpha$2 = p$\cdot\lambda$2 and $\alpha$4 = q$\cdot\lambda$2, or
   $\alpha$2 = p$\cdot\lambda$2 and $\alpha$4' = q'$\cdot\lambda$2
   with p, q, q' as natural numbers greater than zero.

5. Scanning element (1) according to one of the preceding claims, wherein the third gap length ($\beta$13) is of equal magnitude to the fourth gap length ($\gamma$13).

6. Scanning element (1) according to one of the preceding claims, wherein the first receiver conductor track (1.1121) extends over a first arc length ($\alpha$1) and the third receiver conductor track (1.1321) extends over a third arc length ($\alpha$3), and the first arc length ($\alpha$1) is of equal magnitude to the third arc length ($\alpha$3).

7. Scanning element (1) according to one of the preceding claims, wherein the first receiver conductor track (1.1121) and the third receiver conductor track (1.1321) each have a periodic characteristic having a constant first period length ($\lambda$1), the first period length ($\lambda$1) being a first factor (S) of 360°.

14

8. Scanning element (1) according to Claim 7, wherein the first factor (S) is an even number.

9. Scanning element (1) according to one of the preceding claims, wherein

the first gap length (β24) is less than the second gap length (γ24),
the characteristic of the second receiver conductor track (1.1221) has a first amplitude (j2a) within a first section (2a) and a second amplitude (J2b) within a second section (2b), wherein
the first section (2a) extends over a first angle (α2a) starting from the end of the second receiver conductor track (1.1221), which end is adjacent to the first gap (G24), and
the second portion (2b) extends over a second angle (α2b) starting from the other end of the second receiver conductor track (1.1221), which end is adjacent to the second gap (L24), wherein
each of the first and second angles (α2a, α2b) is less than or equal to half of the second arc length (α2), and the first amplitude (j2a) is smaller than the second amplitude (J2b).

10. Scanning element (1) according to one of the preceding claims, wherein the characteristic of the fourth receiver conductor track (1.1421) has a third amplitude (j4a) within a third section (4a) and a fourth amplitude (J4b) within a fourth section (4b), wherein

the third section (4a) extends over a third angle (α4a) starting from the end of the fourth receiver conductor track (1.1421), which end is adjacent to the first gap (G24), and
the fourth portion (4b) extends over a fourth angle (α4b) starting from the other end of the fourth receiver conductor track (1.1421), which end is adjacent to the second gap (L24), wherein
each of the third and fourth angles (α4a, α4b) is less than or equal to half of the fourth arc length (α4), and the third amplitude (j4a) is smaller than the fourth amplitude (J4b).

11. Scanning element (1) according to one of the preceding claims, wherein the second arc length (α2) is of equal magnitude to the fourth arc length (α4).

12. Scanning element (1) according to one of Claims 1 to 8, wherein the second arc length (α2) and the fourth arc length (α4') are of different magnitude.

13. Scanning element (1) according to Claim 12, wherein the first gap length (β24') and the second gap length (γ24) are of equal magnitude.

14. Scanning element (1) according to Claim 12 or 13, wherein a first area defined between the second receiver conductor tracks (1.1221') is as large as the second area defined by the fourth receiver conductor tracks (1.1421').

15. Scanning element (1) according to Claim 12, 13 or 14, wherein the second arc length (α2) is greater than the fourth arc length (α4'), wherein

the characteristic of the second receiver conductor track (1.1221') has a first amplitude (j2') and
the characteristic of the fourth receiver conductor track (1.1421') has a second amplitude (j4'), wherein
the first amplitude (j2') is smaller than the second amplitude (j4').

**Revendications**

1. Elément de balayage (1) pour un dispositif de mesure d'angle à induction qui présente

une première unité de détection (1.11) qui comprend une première piste conductrice de réception (1.1121),
une deuxième unité de détection (1.12) qui comprend une deuxième piste conductrice de réception (1.1221 ; 1.1221'), la deuxième piste conductrice de réception (1.1221 ; 1.1221') s'étendant sur une deuxième longueur d'arc (α2),
une troisième unité de détection (1.13) qui comprend une troisième piste conductrice de réception (1.1321), et
une quatrième unité de détection (1.14) qui comprend une quatrième piste conductrice de réception (1.1421 ; 1.1421'), la quatrième piste conductrice de réception (1.1421 ; 1.1421') s'étendant sur une quatrième longueur d'arc (α4, α4'), dans lequel
le tracé de la première piste conductrice de réception (1.1121) et de la troisième piste conductrice de réception (1.1321) le long d'une première circonférence (K1) d'un premier rayon (R) est configuré de manière périodique, dans lequel la première piste conductrice de réception (1.1121) et la troisième piste conductrice de réception (1.1321) sont disposées de telle sorte qu'il existe entre celles-ci dans la direction circonférentielle (x) un troisième entrefer (G13) d'une troisième longueur d'entrefer ($\beta$13) et un quatrième entrefer (L13) de la quatrième longueur d'entrefer ($\gamma$13), dans lequel

le tracé de la deuxième piste conductrice de réception (1.1221 ; 1.1221') et de la quatrième piste conductrice de réception (1.1421 ; 1.1421') le long d'une deuxième circonférence (K2) d'un deuxième rayon (r) est configuré de manière périodique, dans lequel la deuxième piste conductrice de réception (1.1221 ; 1.1221') et la quatrième piste conductrice de réception (1.1421 ; 1.1421') sont disposées de telle sorte qu'il existe entre celles-ci dans la direction circonférentielle (x) un premier entrefer (G24 ; G24') d'une première longueur d'entrefer $\beta$24 ou $\beta$24' et un deuxième entrefer (L24) d'une deuxième longueur d'entrefer $\gamma$24, dans lequel

le premier rayon (R) et le deuxième rayon (r) sont différents, et

la première longueur d'entrefer $\beta$24 ou $\beta$24' et la deuxième longueur d'entrefer $\gamma$24 sont de dimensions différentes, ou la deuxième longueur d'arc ($\alpha$2) et la quatrième longueur d'arc ($\alpha$4') sont de dimensions différentes,

dans lequel la deuxième piste conductrice de réception (1.1221 ; 1.1221') et la quatrième piste conductrice de réception (1.1421 ; 1.1421') présentent respectivement un tracé périodique d'une deuxième longueur de période $\lambda$2 constante, et la première longueur d'entrefer $\beta$24 ou $\beta$24' est un multiple m ou m' de la deuxième longueur de période $\lambda$2, et la deuxième longueur d'entrefer $\gamma$24 est un multiple n de la deuxième longueur de période $\lambda$2 de sorte que :

$\beta$24 = m·$\lambda$2 et $\gamma$24 = n·$\lambda$2, ou
$\beta$24' = m' ·$\lambda$2 et $\gamma$24 = n·$\lambda$2
où m, m', n en tant que nombres naturels sont supérieurs à zéro.

2. Elément de balayage (1) selon la revendication 1, dans lequel la deuxième piste conductrice de réception (1.1221 ; 1.1221') et la quatrième piste conductrice de réception (1.1421 ; 1.1421') présentent respectivement un tracé périodique d'une deuxième longueur de période ($\lambda$2) constante, la deuxième longueur de période ($\lambda$2) étant un deuxième diviseur (T) de 360°.

3. Elément de balayage (1) selon la revendication 2, dans lequel le deuxième diviseur (T) est un nombre impair.

4. Elément de balayage (1) selon l'une quelconque des revendications précédentes, dans lequel la deuxième piste conductrice de réception (1.1221 ; 1.1221') et la quatrième piste conductrice de réception (1.1421 ; 1.1421') présentent respectivement un tracé périodique d'une deuxième longueur de période ($\lambda$2) constante, et la deuxième longueur d'arc $\alpha$2 est un multiple de la deuxième longueur de période $\lambda$2, et la quatrième longueur d'arc $\alpha$4 ou $\alpha$4' est un multiple de la deuxième longueur de période $\lambda$2, de sorte que :

$\alpha$2 = p·$\lambda$2 et $\alpha$4 = q·$\lambda$2, ou
$\alpha$2 = p·$\lambda$2 et $\alpha$4' = q' ·$\lambda$2
où p, q, q' en tant que nombres naturels sont supérieurs à zéro.

5. Elément de balayage (1) selon l'une quelconque des revendications précédentes, dans lequel la troisième longueur d'entrefer ($\beta$13) est aussi grande que la quatrième longueur d'entrefer ($\gamma$13).

6. Elément de balayage (1) selon l'une quelconque des revendications précédentes, dans lequel la première piste conductrice de réception (1.1121) s'étend sur une première longueur d'arc ($\alpha$1), et la troisième piste conductrice de réception (1.1321) s'étend sur une troisième longueur d'arc ($\alpha$3), et la première longueur d'arc ($\alpha$1) est aussi grande que la troisième longueur d'arc ($\alpha$3).

7. Elément de balayage (1) selon l'une quelconque des revendications précédentes, dans lequel la première piste conductrice de réception (1.1121) et la troisième piste conductrice de réception (1.1321) présentent respectivement un tracé périodique d'une première longueur de période ($\lambda$1) constante, la première longueur de période ($\lambda$1) étant un premier diviseur (S) de 360°.

8. Elément de balayage (1) selon la revendication 7, dans lequel le premier diviseur (S) est un nombre pair.

9. Elément de balayage (1) selon l'une quelconque des revendications précédentes, dans lequel

la première longueur d'entrefer (β24) est inférieure à la deuxième longueur d'entrefer (γ24),
le tracé de la deuxième piste conductrice de réception (1.1221) présente une première amplitude (j2a) à l'intérieur de la première partie (2a) et une deuxième amplitude (J2b) à l'intérieur d'une deuxième partie (2b), dans lequel la première partie (2a) s'étend à partir de l'extrémité, adjacente au premier entrefer (G24), de la deuxième piste conductrice de réception (1.1221) sur un premier angle (α2a), et
la deuxième partie (2b) s'étend à partir de l'autre extrémité, adjacente au deuxième entrefer (L24), de la deuxième piste conductrice de réception (1.1221) sur un deuxième angle (α2b), dans lequel
le premier et le deuxième angle (α2a, α2b) sont respectivement inférieurs ou égaux à la moitié de la deuxième longueur d'arc (α2), et la première amplitude (j2a) est inférieure à la deuxième amplitude (J2b).

10. Elément de balayage (1) selon l'une quelconque des revendications précédentes, dans lequel le tracé de la quatrième piste conductrice de réception (1.1421) présente une troisième amplitude (j4a) à l'intérieur d'une troisième partie (4a) et une quatrième amplitude (J4b) à l'intérieur d'une quatrième partie (4b), dans lequel

la troisième partie (4a) s'étend à partir de l'extrémité, adjacente au premier entrefer (G24), de la quatrième piste conductrice de réception (1.1421) sur un troisième angle (α4a), et
la quatrième partie (4b) s'étend à partir de l'autre extrémité, adjacente au deuxième entrefer (L24), de la quatrième piste conductrice de réception (1.1421) sur un quatrième angle (α4b), dans lequel
le troisième et le quatrième angle (α4a, α4b) sont respectivement inférieurs ou égaux à la moitié de la quatrième longueur d'arc (α4), et la troisième amplitude (j4a) est inférieure à la quatrième amplitude (J4b).

11. Elément de balayage (1) selon l'une quelconque des revendications précédentes, dans lequel la deuxième longueur d'arc (α2) est aussi grande que la quatrième longueur d'arc (α4).

12. Elément de balayage (1) selon l'une quelconque des revendications 1 à 8, dans lequel la deuxième longueur d'arc (α2) et la quatrième longueur d'arc (α4') sont de dimensions différentes.

13. Elément de balayage (1) selon la revendication 12, dans lequel la première longueur d'entrefer (β24') et la deuxième longueur d'entrefer (γ24) sont de dimensions identiques.

14. Elément de balayage (1) selon la revendication 12 ou 13, dans lequel une première surface définie entre les deuxièmes pistes conductrices de réception (1.1221') est aussi grande que la deuxième surface définie par les quatrièmes pistes conductrices de réception (1.1421').

15. Elément de balayage (1) selon la revendication 12, 13 ou 14, dans lequel la deuxième longueur d'arc (α2) est supérieure à la quatrième longueur d'arc (α4'), dans lequel

le tracé de la deuxième piste conductrice de réception (1.1221') présente une première amplitude (j2'), et
le tracé de la quatrième piste conductrice de réception (1.1421') présente une deuxième amplitude (j4'), dans lequel
la première amplitude (j2') est inférieure à la deuxième amplitude (j4').

Fig. 1

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2018002568 A1